# EUROPEAN PATENT SPECIFICATION

(11) **EP 3 809 229 B1**
(45) Date of publication and mention of the grant of the patent: **14.09.2022**
(21) Application number: 18922368.8
(22) Date of filing: 14.06.2018
(51) Int. Cl.: G05D 1/10, G05D 1/00, B64C 39/02, H04B 7/185

(54) **FLIGHT MODE REPORT METHOD AND APPARATUS, AND CONTROL POLICY CHANGE METHOD AND APPARATUS**
FLUGMODUSMELDEVERFAHREN UND -VORRICHTUNG UND STEUERUNGSRICHTLINIENÄNDERUNGSVERFAHREN UND -VORRICHTUNG
PROCÉDÉ ET APPAREIL DE RAPPORT DE MODE DE VOL, ET PROCÉDÉ ET APPAREIL DE CHANGEMENT DE POLITIQUE DE COMMANDE

(43) Date of publication of application: 21.04.2021
(73) Proprietor: Beijing Xiaomi Mobile Software Co., Ltd., Beijing 100085 (CN)
(72) Inventor: HONG, Wei, Beijing 100085 (CN)
(74) Representative: Hughes, Andrea Michelle
(86) International application number: PCT/CN2018/091283
(87) International publication number: WO 2019/237305

(56) References cited:
- CN-A- 105 867 181
- CN-A- 107 409 174
- CN-A- 107 861 518
- CN-A- 108 064 360
- CN-A- 108 064 360
- CN-A- 108 781 112
- CN-A- 108 885 468
- CN-A- 108 886 824
- US-A1- 2010 084 513
- US-B1- 9 836 049

## Description

### TECHNICAL FIELD

The present disclosure relates to the field of communication technology, and more particularly, to a method and a device for reporting a flight mode and a method and a device for changing a control strategy.

### BACKGROUND

An Unmanned Aerial Vehicle (UAV) is an unmanned aircraft operated by a radio remote control device and a self-contained program control device. The UAV is actually a general term for unmanned aircrafts. From a technical perspective, the UAV can be an unmanned fixed-wing aircraft, an unmanned vertical take-off and landing aircraft, an unmanned airship, an unmanned helicopter, an unmanned multi-rotor aircraft or an unmanned parawing aircraft and so on.

With the rapid development of the UAV technology, the cost of the UAV is reduced and the functions of the UAV are improved, the UAV is widely used in all aspects of life. At present, applications of UAV in the fields of aerial photography, agriculture, plant protection, miniature selfies, express transportation, disaster rescue, observation of wild animals, monitoring of infectious diseases, surveying and mapping, news reports, power inspections, disaster relief, film and television shooting, creating romance, etc. have greatly expanded the purpose of the UAV. Various countries are actively expanding industry applications and developing of the UAV technology.

In order to further expand the applications of the UAV, the 3rd Generation Partnership Project (3GPP) has passed the project of Enhanced Support for Aerial Vehicles, which aims for such research and standardization that the cellular network provide services that meet the demand for the UAV.

There are generally two modes for the UAV. One mode is a fixed mode, that is, an operator will plan a flight route of the UAV through a controller, so that the UAV can fly according to the planned route, and the controller does not need to carry out the drone control at all times. The other mode is dynamic mode, that is, the controller will remotely control the drone in real time through the controller at all times. For fixed mode, because the flight path and trajectory of the UAV are fixed, the cellular network can predict which base stations in the cellular network the UAV will pass through. In the actual flight process, the flight mode of the UAV may be changed. However, it is a technical problem to be solved how the base station knows the changed flight mode.

CN105867181A discloses a control method and apparatus of an unmanned aerial vehicle. The method comprises the following steps: detecting whether the flight state of the unmanned aerial vehicle in a flying process is abnormal; if so, obtaining a hovering instruction corresponding to an abnormity, wherein the hovering instruction is used for indicating the unmanned aerial vehicle to hover according to a preset hovering mode; and in response to the hovering instruction, controlling the unmanned aerial vehicle to hover according to the preset hovering mode. By use of the method and apparatus provided by the invention, the problem that the unmanned aerial vehicle cannot automatically process an abnormal condition is solved. CN108064360A provides a method and apparatus for controlling an unmanned plane, and the method is applied to a base station. The method comprises the following steps: receiving flight path information transmitted by an unmanned plane controller, wherein the flight path information is used for characterizing a flight path set by the unmanned plane controller for the controlled unmanned plane; determining the flight path according to the flight path information; determining a next base station to which the unmanned plane is to be moved according to the flight path, and performing a switching preparation for the base station. Therefore, the method and the apparatus improve the mobility of the unmanned plane, and can also reduce the delay of the base station handover. CN107861518A discloses an unmanned aircraft control method and a terminal. The unmanned aircraft control method comprises the steps that the terminal determines location information of at least one waypoint according to a first setting operation of a user under the condition that the terminal is not connected to an unmanned aircraft and determines a flight path according to the location information of the at least one waypoint; the terminal stores the flight path into a path record of a path database; and the terminal takes the first path record associated with the unmanned aircraft from the path database after establishing connection with the unmanned aircraft and sends the first path record to the unmanned aircraft so as to control the unmanned aircraft to fly according to information in the first path record. The embodiment of the invention can improve the flight path acquisition efficiency of the unmanned aircraft and can reduce the power consumption of the unmanned aircraft when executing a route task.

### SUMMARY

In view of this, the present disclosure provides a method and a device for reporting a flight mode, a method and a device for changing a control strategy, a UAV, a base station, and a computer-readable storage medium, so that when the flight mode is changed, the UAV in a fixed mode and in a connected state can report the changed flight mode to the base station in time, thus the base station can change the control strategy of the UAV in time.

According to a first aspect of the present disclosure, a method for reporting a flight mode applied to an unmanned aerial vehicle (UAV) in a first mode is provided as defined by claim 1. In an embodiment, the sending a flight mode change notification of the UAV to a base station includes: sending the flight mode change notification of the UAV to the base station through a media access control (MAC) control element (CE); or sending the flight mode change notification of the UAV to the base station through a radio resource control (RRC) signaling.

In an embodiment, the MAC CE includes a flight mode report MAC CE.

In an embodiment, the sending the flight mode change notification of the UAV to the base station through a RRC signaling includes: sending the flight mode change notification to the base station by setting a first information unit indicating the flight mode in a user equipment (UE) assistance information signaling to a first preset value; or adding a second information unit indicating the flight mode to the UE assistance information signaling, and sending the flight mode change notification to the base station by setting the newly added second information unit to a second preset value; or sending the flight mode change notification to the base station by setting a third information unit indicating the flight mode in a RRC connection reconfiguration completion signaling to a third preset value.

According to a second aspect of the present disclosure, a method for changing a control strategy is applied to a base station as defined by claim 5.

According to a third aspect of the present disclosure, a device for reporting a flight mode is provided as defined by claim 6.

In an embodiment, the sending module includes: a first sending sub-module, configured to send the flight mode change notification of the UAV to the base station through a MAC CE; or a second sending sub-module, configured to send the flight mode change notification of the UAV to the base station through a RRC signaling.

In an embodiment, the MAC CE includes a flight mode report MAC CE.

In an embodiment, the second sending sub-module includes: a first sending unit, configured to send the flight mode change notification to the base station by setting a first information unit indicating the flight mode in a UE assistance information signaling to a first preset value; or a second sending unit, configured to add a second information unit indicating the flight mode to the UE assistance information signaling, and send the flight mode change notification to the base station by setting the newly added second information unit to a second preset value; or a third sending unit, configured to send the flight mode change notification to the base station by setting a third information unit indicating the flight mode in a RRC connection reconfiguration completion signaling to a third preset value.

According to a fourth aspect of the present disclosure, a device for changing a control strategy is provided as defined by claim 10.

Also described is a UAV, including: a processor; and memory configured to store instructions executable by the processor, wherein, the processor is configured to: when the UAV is in a connected state, change a flight mode from a first mode to a second mode; send a flight mode change notification of the UAV to a base station to notify the base station that the flight mode of the UAV is changed from the first mode to the second mode.

Also described is a base station including: a processor; and memory configured to store instructions executable by the processor, wherein, the processor is configured to: receiving a flight mode change notification of a UAV reported by the UAV; determining that a flight mode of the UAV is changed from a first mode to a second mode according to the flight mode change notification; changing the control strategy of the UAV according to the change of the flight mode of the UAV from the first mode to the second mode.

Also described is a non-transitory computer readable storage medium, having stored therein instructions that, when executed by a processor, to cause the processor to perform the method for reporting a flight mode.

Also described is a non-transitory computer-readable storage medium having computer instructions stored thereon, executed by a processor, to cause the processor to perform the method for changing a control strategy.

The technical solutions provided by the embodiments of the present disclosure may include the following beneficial effects.

The flight mode is changed from the first mode to the second mode, and the flight mode change notification of the UAV is sent to the base station, so that the base station knows that the flight mode of the UAV is changed from the first mode to the second mode, thereby facilitating subsequent changes of control strategies of the UAV by the base stations in a timely manner.

It is determined that the flight mode of the UAV is changed from the first mode to the second mode according to the received flight mode change notification, so that the change of the flight mode from the first mode to the second mode is known in time, and the control strategy of the UAV can be changed accordingly.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
FIG. 1A is a flow chart showing a method for reporting a flight mode according to an embodiment of the present disclosure;
FIG. 1B is a schematic structural diagram showing a flight mode report MAC CE according to an embodiment of the present disclosure;
FIG. 2 is a flow chart showing a method for changing a control strategy according to an embodiment of the present disclosure;
FIG. 3 is a signaling flow chart showing a method for changing a control strategy according to an embodiment of the present disclosure;
FIG. 4 is a block diagram showing a device for reporting a flight mode according to an embodiment of the present disclosure;
FIG. 5 is a block diagram showing a device for reporting a flight mode according to another embodiment of the present disclosure;
FIG. 6 is a block diagram showing a device for reporting a flight mode according to still another embodiment of the present disclosure;
FIG. 7 is a block diagram showing a device for changing a control strategy according to an embodiment of the present disclosure;
FIG. 8 is a block diagram showing a device for reporting a flight mode according to an embodiment of the present disclosure;
FIG. 9 is a block diagram showing a device for changing a control strategy according to an embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of devices and methods consistent with aspects related to the disclosure as recited in the appended claims.

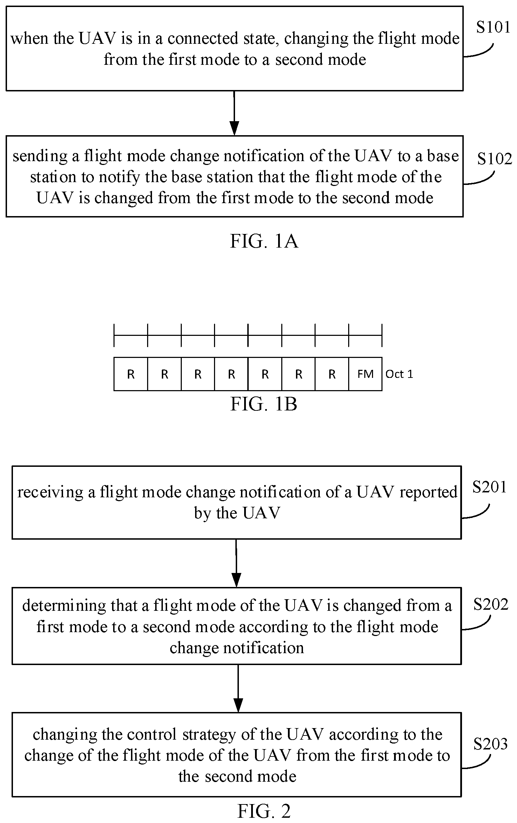

FIG. 1A is a flow chart showing a method for reporting a flight mode according to an embodiment of the present application. This embodiment is described from the UAV side in a first mode. As shown in FIG. 1A, the method for reporting a flight mode includes the following steps.

In step S101, when the UAV is in a connected state, the flight mode is changed from the first mode to a second mode.

When the first mode is a fixed mode, the second mode is a dynamic mode. When the first mode is a dynamic mode, the second mode is a fixed mode.

In step S102, a flight mode change notification of the UAV is sent to a base station to notify the base station that the flight mode of the UAV is changed from the first mode to the second mode.

The flight mode change notification of the UAV can be sent to the base station in various approaches. For example, the flight mode change notification of the UAV can be sent to the base station in the following approaches.

In approach 1, the flight mode change notification of the UAV is sent to the base station through a media access control (MAC) control element (CE).

The MAC CE may include a flight mode report MAC CE (FMR MAC CE). The format of FMR MAC CE can be shown in FIG. 1B, in which, R is a reserved bit and FM is used to indicate the flight mode. For example, when the value of FM is 1, it means that the flight mode is changed to the fixed mode, and when the value of FM is 0, it means that the flight mode is changed to the dynamic mode. The above values are only an example. In practical applications, it can be set flexibly.

In approach 2, the flight mode change notification of the UAV is sent to the base station through a radio resource control (RRC signaling).

The sending the flight mode change notification of the UAV to the base station through a RRC signaling can include the following approaches.

In approach 21, the flight mode change notification is sent to the base station by setting a first information unit indicating the flight mode in a UE assistance information (UEAssistanceInformation) signaling to the first preset value.

The first information unit is an existing information unit in the UEAssistanceInformation signaling, and the first preset value can be flexibly set according to needs, for example, a null value, or 0, or 1, etc.

For example, if the value of the first information unit is 1, it means that the flight mode of the UAV is changed to the dynamic mode, and if the value of the first information unit is 0, it means that the flight mode of the UAV is changed to the fixed mode.

In approach 22, a second information unit indicating the flight mode is added to the UEAssistanceInformation signaling, and the flight mode change notification is sent to the base station by setting the newly added second information unit to a second preset value.

The second information unit is not an existing information unit in the UEAssistanceInformation signaling, and the second preset value can be flexibly set according to needs, for example, a null value, or 0, or 1, etc.

For example, if the value of the second information unit is 1, it means that the flight mode of the UAV is changed to the dynamic mode. If the value of the second information unit is 0 or there is no second information unit in the UEAssistanceInformation signaling, it means that the flight mode of the UAV is changed to the fixed mode.

In approach 23, the flight mode change notification is sent to the base station by setting a third information unit indicating the flight mode in a RRC connection reconfiguration complete (ConnectionReconfigurationComplete) signaling to a third preset value.

The third preset value can be flexibly set according to needs, for example, a null value, or 0, or 1, etc.

For example, if the value of the third information unit is 1, it means that the flight mode of the UAV is changed to the dynamic mode, and if the value of the third information unit is 0, it means that the flight mode of the UAV is changed to the fixed mode.

It can be seen that in this embodiment, the flight mode change notification of the UAV can be sent to the base station through a variety of RRC signaling, the implementation methods are flexible and diverse.

In the above embodiment, the flight mode is changed from the first mode to the second mode, and the flight mode change notification of the UAV is sent to the base station, so that the base station knows that the UAV flight mode is changed from the first mode to the second mode, which provides conditions for the subsequent change on the control strategy of the UAV by the base station in time.

FIG. 2 is a flow chart showing a method for changing a control strategy according to an embodiment of the present disclosure. This embodiment is described from the UE side. As shown in FIG. 2, the method includes the following steps.

In step S201, a flight mode change notification of a UAV reported by the UAV is received.

In step S202, it is determined that a flight mode of the UAV is changed from a first mode to a second mode according to the flight mode change notification.

When the first mode is a fixed mode, the second mode is a dynamic mode. When the first mode is a dynamic mode, the second mode is a fixed mode.

In step S203, a control strategy of the UAV is changed according to the flight mode of the UAV that is changed from the first mode to the second mode.

For example, when the base station determines that the flight mode of the UAV is changed from the fixed mode to the dynamic mode, flight path information in the fixed mode may no longer be used as assistance information to improve the mobility of the UAV.

In the above embodiment, it is determined that the flight mode of the UAV is changed from the first mode to the second mode according to the flight mode change notification, it is possible to know in time that the flight mode is changed from the first mode to the second mode, and the control policy of the UAV may be changed accordingly.

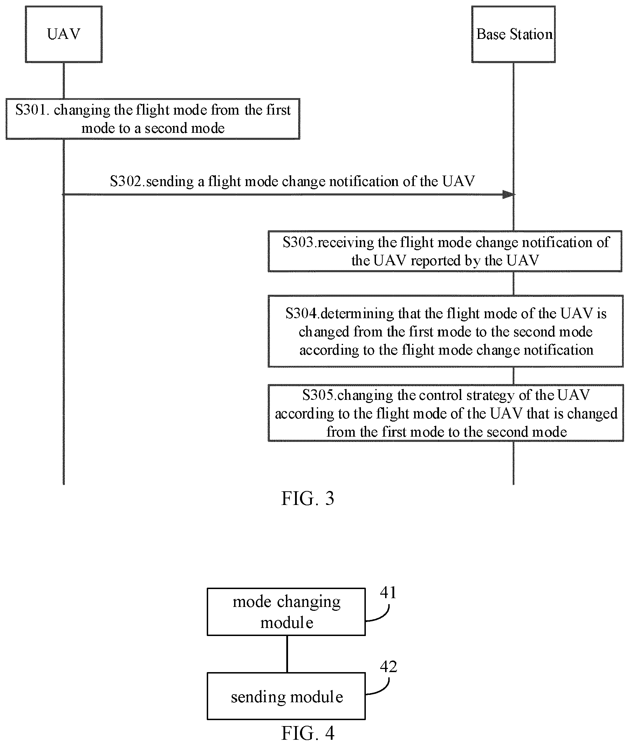

FIG. 3 is a signaling flow chart showing a method for changing a control policy according to an embodiment of the present disclosure. This embodiment is described from the perspective of interaction between a UAV and a base station. As shown in FIG. 3, the method includes the following steps.

In step S301, when the UAV is in a connected state, the UAV change the flight mode from the first mode to a second mode.

The first mode may be a fixed mode, and the second mode may be a dynamic mode.

In step S302, the UAV sends a flight mode change notification of the UAV to a base station.

In step S303, the base station receives the flight mode change notification of the UAV reported by the UAV.

In step S304, the base station determines that the flight mode of the UAV is changed from the first mode to the second mode according to the flight mode change notification.

In step S305, the base station changes the control strategy of the UAV according to the flight mode of the UAV that is changed from the first mode to the second mode.

In the above embodiment, through the interaction between the UAV and the base station, after the flight mode is changed from the first mode to the second mode, the flight mode change notification of the UAV is sent to the base station so that the base station can know that the flight mode of the UAV is changed from the first mode to the second mode, and the control strategy of the UAV can be changed in time.

FIG. 4 is a block diagram showing a device for reporting a flight mode according to an embodiment of the present disclosure. The device may be located in a UAV. As shown in FIG. 4, the device includes a mode changing module 41 and a sending module 42.

The mode changing module 41 is configured to change the flight mode from the first mode to the second mode when the UAV is in a connected state.

When the first mode is a fixed mode, the second mode is a dynamic mode. When the first mode is a dynamic mode, the second mode is a fixed mode.

The sending module 42 is configured to send a flight mode change notification of the UAV to the base station after the mode change module 41 changes the flight mode from the first mode to the second mode to notify the base station that the flight mode of the UAV is changed from the first mode to the second mode.

In the above embodiment, by changing the flight mode from the first mode to the second mode, and sending the flight mode change notification of the UAV to the base station, the base station know that the flight mode of the UAV is changed from the first mode to the second mode. This provides conditions for the subsequent change on the control strategy of the UAV by the base station in time.

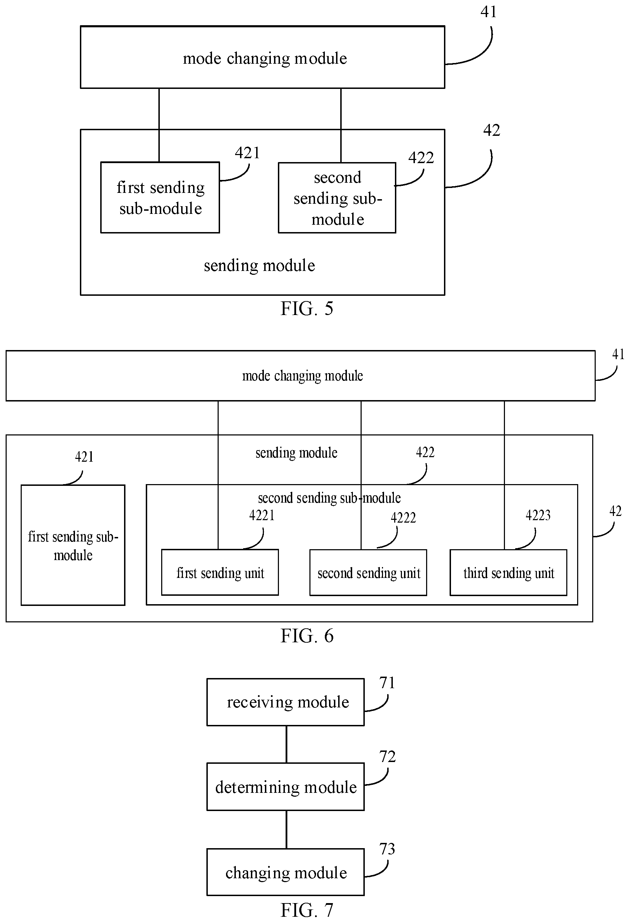

FIG. 5 is a block diagram showing a device for reporting the flight mode according to another embodiment of the present disclosure. As shown in FIG. 5, based on the embodiment shown in FIG. 4, the sending module 42 may include a sending sub-module 421 or a second sending sub-module 422.

The first sending sub-module 421 is configured to send the flight mode change notification of the UAV to the base station through a MAC CE.

The MAC CE may include an FMR MAC CE. The format of the FMR MAC CE can be shown in FIG. 1B, in which, R is a reserved bit and FM is used to indicate the flight mode. For example, when the value of FM is 1, it means that the flight mode is changed to a fixed mode, and when the value of FM is 0, it means that the flight mode is changed to a dynamic mode. The value of FM is only an example. In practical applications, it can be set flexibly.

The second sending sub-module 422 is configured to send the flight mode change notification of the UAV to the base station through a RRC signaling.

In the above embodiment, the flight mode change notification of the UAV can be sent to the base station in a variety of approaches, and the implementation methods are flexible and diverse.

FIG. 6 is a block diagram showing a device for reporting a flight mode according to another embodiment of the present disclosure. As shown in FIG. 6, based on the above-mentioned embodiment shown in FIG. 5, the second sending sub-module 422 may include a first sending unit 4221, a second sending unit 4222, or a third sending unit 4223.

The first sending unit 4221 is configured to send the flight mode change notification to the base station by setting a first information unit indicating the flight mode in UEAssistanceInformation signaling to a first preset value.

The first information unit is an existing information unit in the UEAssistanceInformation signaling, and the first preset value can be flexibly set according to needs, for example, a null value, or 0, or 1, etc.

For example, if the value of the first information unit is 1, it means that the flight mode of the UAV is changed to the dynamic mode, and if the value of the first information unit is 0, it means that the flight mode of the UAV is changed to the fixed mode.

The second sending unit 4222 is configured to add a second information unit indicating the flight mode to the UEAssistanceInformation signaling, and the flight mode change notification is sent to the base station by setting the newly added second information unit to a second preset value.

The second information unit is not an existing information unit in the UEAssistanceInformation signaling, and the second preset value can be flexibly set according to needs, for example, a null value, or 0, or 1, etc.

For example, if the value of the second information unit is 1, it means that the flight mode of the UAV is changed to the dynamic mode. If the value of the second information unit is 0 or there is no second information unit in the UEAssistanceInformation signaling, it means that the flight mode of the UAV is changed to the fixed mode.

The third sending unit 4223 is configured to send the flight mode change notification to the base station by setting a third information unit indicating the flight mode in a RRC connection reconfiguration complete (ConnectionReconfigurationComplete) signaling to a third preset value.

The third preset value can be flexibly set according to needs, for example, a null value, or 0, or 1, etc.

For example, if the value of the third information unit is 1, it means that the flight mode of the UAV is changed to the dynamic mode, and if the value of the third information unit is 0, it means that the flight mode of the UAV is changed to the fixed mode.

In the above-mentioned embodiment, the flight mode change notification of the UAV can be sent to the base station through various RRC signaling, the implementation methods are flexible and diverse.

FIG. 7 is a block diagram showing a device for changing a control strategy according to an embodiment of the present disclosure. The device may be located in a base station. As shown in FIG. 7, the device includes: a receiving module 71, a determining module 72, and a changing module 73.

The receiving module 71 is configured to receive a flight mode change notification of a UAV reported by the UAV.

The determining module 72 is configured to determine that a flight mode of the UAV is changed from a first mode to a second mode according to the flight mode change notification received by the receiving module 71.

When the first mode is a fixed mode, the second mode is a dynamic mode. When the first mode is a dynamic mode, the second mode is a fixed mode.

The changing module 73 is configured to change a control strategy of the UAV according to the change of the flight mode of the UAV from the first mode to the second mode determined by the determination module 72.

For example, when the base station determines that the flight mode of the UAV is changed from the fixed mode to the dynamic mode, flight path information in the fixed mode may no longer be used as assistance information to improve the mobility of the UAV.

In the above embodiment, it is determined that the flight mode of the UAV is changed from the first mode to the second mode according to the flight mode change notification, it is possible to know in time that the flight mode is changed from the first mode to the second mode, and the control policy of the UAV may be changed accordingly.

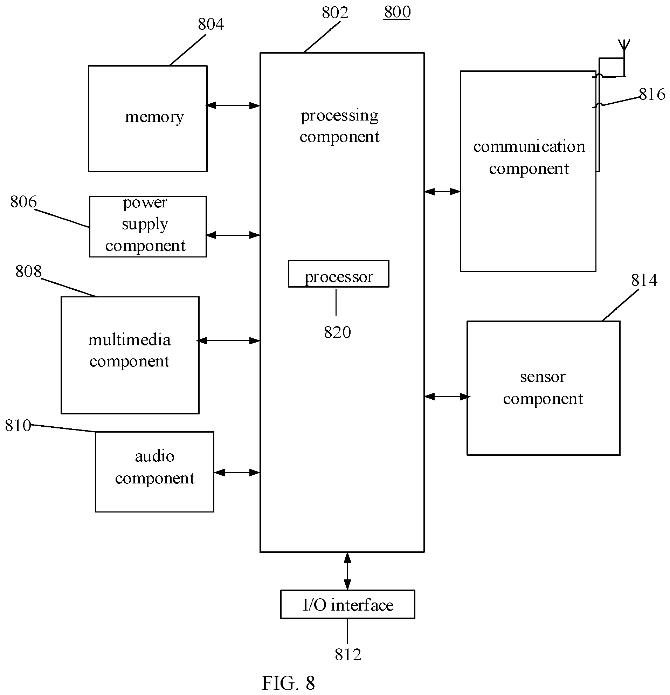

FIG. 8 is a block diagram showing a device for reporting a flight mode reporting according to an embodiment of the present disclosure. For example, the device 800 may be a mobile phone, a computer, a digital broadcasting terminal, a message transmission device, a game console, a tablet device, a medical device, a fitness device, a personal digital assistant, and other user equipment.

Referring to FIG. 8, the device 800 may include one or more of the following components: a processing component 802, memory 804, a power supply component 806, a multimedia component 808, an audio component 810, an input/output (I/O) interface 812, a sensor component 814, and a communication component 816.

The processing component 802 generally controls the overall operations of the device 800, such as operations associated with display, telephone calls, data communications, camera operations, and recording operations. The processing component 802 may include one or more processors 820 to execute instructions to implement all or part of the steps of the foregoing method. In addition, the processing component 802 may include one or more modules to facilitate the interaction between the processing component 802 and other components. For example, the processing component 802 may include a multimedia module to facilitate the interaction between the multimedia component 808 and the processing component 802.

One of the processors 820 in the processing component 802 may be configured to: when the VAV is in the connected state, change a flight mode from a first mode to a second mode; send a flight mode change notification of the UAV to the base station to notify the base station that the flight mode of the UAV is changed from the first mode to the second mode.

The memory 804 is configured to store various types of data to support the operation of the device 800. Examples of such data include instructions for any application or method executed by on the device 800, contact data, phone book data, messages, pictures, videos, etc. The memory 804 can be implemented by any type of volatile or non-volatile storage device or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power supply component 806 provides power to various components of the device 800. The power supply component 806 may include a power management system, one or more power supplies, and other components associated with the generation, management, and distribution of power for the device 800.

The multimedia component 808 includes a screen that provides an output interface between the device 800 and a user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touch, sliding, and gestures on the touch panel. The touch sensor can not only sense the boundary of a touch or slide action, but also detect the duration and pressure related to the touch or slide operation. In some embodiments, the multimedia component 808 includes a front camera and/or a rear camera. When the device 800 is in an operation mode, such as a shooting mode or a video mode, the front camera and/or the rear camera can receive external multimedia data. Each front camera and rear camera can be a fixed optical lens system or have a focal length and optical zoom capabilities.

The audio component 810 is configured to output and/or input audio signals. For example, the audio component 810 includes a microphone (MIC). When the device 800 is in an operating mode, such as a call mode, a recording mode, and a voice recognition mode, the microphone is configured to receive external audio signals. The received audio signal may be further stored in the memory 804 or transmitted via the communication component 816. In some embodiments, the audio component 810 further includes a speaker for outputting audio signals.

The I/O interface 812 provides an interface between the processing component 802 and the peripheral interface module. The peripheral interface module may be a keyboard, a click wheel, a button, and so on. These buttons may include but are not limited to: a home button, a volume button, a start button, and a lock button.

The sensor component 814 includes one or more sensors for providing the device 800 with various aspects of state assessment. For example, the sensor component 814 can detect the on/off state of the device 800 and the relative positioning of components, such as the display and keypad of the device 800. The sensor component 814 can also detect the position change of the device 800 or a component of the device 800, whether a user contacts with the device 800, the orientation or acceleration/deceleration of the device 800, and the temperature change of the device 800. The sensor component 814 may include a proximity sensor configured to detect the presence of nearby objects when there is no physical contact. The sensor component 814 may also include a light sensor, such as a CMOS or CCD image sensor, for use in imaging applications. In some embodiments, the sensor component 814 may also include an acceleration sensor, a gyroscope sensor, a magnetic sensor, a pressure sensor or a temperature sensor.

The communication component 816 is configured to facilitate wired or wireless communication between the device 800 and other devices. The device 800 can access a wireless network based on a communication standard, such as Wi-Fi, 2G, or 3G, or a combination thereof. In an exemplary embodiment, the communication component 816 receives a broadcast signal or broadcast related information from an external broadcast management system via a broadcast channel. In an exemplary embodiment, the communication component 816 further includes a near field communication (NFC) module to facilitate short-range communication. For example, the NFC module can be implemented based on a radio frequency identification (RFID) technology, an infrared data association (IrDA) technology, an ultra-wideband (UWB) technology, a Bluetooth (BT) technology and other technologies.

In an exemplary embodiment, the device 800 may be implemented by one or more application specific integrated circuits (ASICs), digital signal processors (DSP), digital signal processing devices (DSPD), programmable logic devices (PLD), Field programmable gate array (FPGA), controller, microcontroller, microprocessor or other electronic components, so as to implement the above methods.

In an exemplary embodiment, there is also provided a non-transitory computer-readable storage medium including instructions, such as the memory 804 including instructions, which may be executed by the processor 820 of the device 800 to implement the foregoing method. For example, the non-transitory computer-readable storage medium may be a ROM, a random-access memory (RAM), a CD-ROM, a magnetic tape, a floppy disk, an optical data storage device, etc.

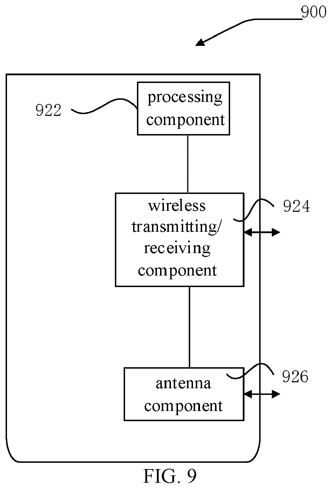

FIG. 9 is a block diagram showing a device for reporting the flight mode reporting according to another embodiment of the present disclosure. The device 900 may be provided as a base station. The device 900 includes a processing component 922, a wireless transmitting/receiving component 924, an antenna component 926, and a signal processing part dedicated to a wireless interface. The processing component 922 may further include one or more processors.

One of the processors in the processing component 922 may be configured to: receive a flight mode change notification reported by a UAV; determine that a flight mode of the UAV is changed from a first mode to a second mode according to the flight mode change notification; change the control strategy of the UAV according to the flight mode of the UAV that is changed from the first mode to the second mode.

In an exemplary embodiment, a non-transitory computer-readable storage medium including instructions is also provided, and the foregoing instructions can be executed by the processing component 1322 of the device 1300 to complete the foregoing method for changing the control strategy. For example, the non-transitory computer-readable storage medium may be a ROM, a random-access memory (RAM), a CD-ROM, a magnetic tape, a floppy disk, an optical data storage device, etc.

For the device embodiment, since it basically corresponds to the method embodiment, the part of the description of the method embodiment may be referred for related parts. The device embodiments described above are merely illustrative, in which, the units described as separate components may or may not be physically separated, and the units described as display components may or may not be physical units, that is, they may be located in one place, or distributed to multiple network units. Some or all of the modules may be selected according to actual needs to achieve the objectives of the solutions of the embodiments. A person skilled in the art can understand and implement it without creative work.

It should be noted that in this disclosure, relational terms such as first and second are only used to distinguish one entity or operation from another entity or operation, and do not necessarily require or imply that there is any such actual relationship or sequence between these entities or operations. The terms "include", "comprise" or any other variants thereof are intended to cover non-exclusive inclusion, so that a process, method, article or device including a series of elements not only includes those elements, but also includes other elements not explicitly listed, or also include elements inherent to such processes, methods, articles, or device. If there are no more restrictions, the element defined by the sentence "including a..." does not exclude the existence of other same elements in the process, method, article, or device including the element.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with the scope of the invention being defined by the following claims.

It will be appreciated that the present invention is not limited to the exact construction that has been described above and illustrated in the accompanying drawings and that various modifications and changes can be made without departing from the scope thereof. It is intended that the scope of the invention only be limited by the appended claims.

## Claims

1. A method for reporting a flight mode, applicable to an unmanned aerial vehicle, UAV, in a first mode, comprising:
when the UAV is in a connected state, changing the flight mode from the first mode to a second mode (S101), wherein the UAV in the connected state is capable of reporting a changed flight mode to a base station, wherein when the first mode is a fixed mode, the second mode is a dynamic mode, or when the first mode is a dynamic mode, the second mode is a fixed mode, wherein in the fixed mode, a flight route of the UAV is planed through a controller, and in the dynamic mode, the UAV is controlled remotely through the controller;
sending a flight mode change notification of the UAV to the base station to notify the base station that the flight mode of the UAV is changed from the first mode to the second mode (S102).

2. The method according to claim 1, wherein said sending the flight mode change notification of the UAV to the base station (S102) comprises:
sending the flight mode change notification of the UAV to the base station through a media access control, MAC, control element, CE; or
sending the flight mode change notification of the UAV to the base station through a radio resource control, RRC, signaling.

3. The method according to claim 2, wherein the MAC CE comprises a flight mode report MAC CE.

4. The method according to claim 2, wherein said sending the flight mode change notification of the UAV to the base station through the RRC signaling comprises:
sending the flight mode change notification to the base station by setting a first information unit indicating the flight mode in a user equipment, UE, assistance information signaling to a first preset value; or
adding a second information unit indicating the flight mode to the UE assistance information signaling, and sending the flight mode change notification to the base station by setting the newly added second information unit to a second preset value; or
sending the flight mode change notification to the base station by setting a third information unit indicating the flight mode in a RRC connection reconfiguration completion signaling to a third preset value.

5. A method for changing a control strategy, applicable to a base station, comprising:
receiving a flight mode change notification of a UAV reported by the UAV (S201);
determining that a flight mode of the UAV is changed from a first mode to a second mode according to the flight mode change notification (S202), wherein when the first mode is a fixed mode, the second mode is a dynamic mode, or when the first mode is a dynamic mode, the second mode is a fixed mode, wherein in the fixed mode, a flight route of the UAV is planed through a controller, and in the dynamic mode, the UAV is controlled remotely through the controller;
changing the control strategy of the UAV according to the change of the flight mode of the UAV from the first mode to the second mode (S203).

6. A device for reporting a flight mode, applied to a UAV in a first mode, comprising:
a mode changing module (41), configured to change the flight mode from the first mode to a second mode when the UAV is in a connected state, wherein the UAV in the connected state is capable of reporting a changed flight mode to a base station, wherein when the first mode is a fixed mode, the second mode is a dynamic mode, or when the first mode is a dynamic mode, the second mode is a fixed mode, wherein in the fixed mode, a flight route of the UAV is planed through a controller, and in the dynamic mode, the UAV
is controlled remotely through the controller;
a sending module (42), configured to send a flight mode change notification of the UAV to the base station after the mode changing module changes the flight mode from the first mode to the second mode to notify the base station that the flight mode of the UAV is changed from the first mode to the second mode.

7. The device according to claim 6, wherein the sending module (42) comprises:
a first sending sub-module (421), configured to send the flight mode change notification of the UAV to the base station through a MAC CE; or
a second sending sub-module (422), configured to send the flight mode change notification of the UAV to the base station through a RRC signaling.

8. The device according to claim 7, wherein the MAC CE comprises a flight mode report MAC CE.

9. The device according to claim 7, wherein the second sending sub-module (422) comprises:
a first sending unit (4221), configured to send the flight mode change notification to the base station by setting a first information unit indicating the flight mode in a UE assistance information signaling to a first preset value; or
a second sending unit (4222), configured to add a second information unit indicating the flight mode to the UE assistance information signaling, and send the flight mode change notification to the base station by setting the newly added second information unit to a second preset value; or
a third sending unit (4223), configured to send the flight mode change notification to the base station by setting a third information unit indicating the flight mode in a RRC connection reconfiguration completion signaling to a third preset value.

10. A device for changing a control strategy, applied to a base station, comprising:
a receiving module (71), configured to receive a flight mode change notification of a UAV reported by the UAV;
a determining module (72), configured to determine that a flight mode of the UAV is changed from a first mode to a second mode according to the flight mode change notification received by the receiving module, wherein when the first mode is a fixed mode, the second mode is a dynamic mode, or when the first mode is a dynamic mode, the second mode is a fixed mode, wherein in the fixed mode, a flight route of the UAV is planed through a controller, and in the dynamic mode, the UAV is controlled remotely through the controller;
a changing module (73), configured to change the control strategy of the UAV according to the change of the flight mode of the UAV from the first mode to the second mode determined by the determination module.

## Patentansprüche

1. Verfahren zum Berichten eines Flugmodus, anwendbar auf ein unbemanntes Luftfahrzeug, UAV, in einem ersten Modus, umfassend:
wenn das UAV in einem verbundenen Zustand ist, Ändern des Flugmodus von dem ersten Modus zu einem zweiten Modus (S101), wobei das UAV in dem verbundenen Zustand in der Lage ist, einer Basisstation einen geänderten Flugmodus zu berichten, wobei, wenn der erste Modus ein festgelegter Modus ist, der zweite Modus ein dynamischer Modus ist, oder, wenn der erste Modus ein dynamischer Modus ist, der zweite Modus ein festgelegter Modus ist, wobei in dem festgelegten Modus eine Flugroute des UAV durch eine Steuereinheit geplant wird und in dem dynamischen Modus das UAV per Fernzugriff durch die Steuereinheit gesteuert wird;
Senden einer Flugmodusänderungsmeldung des UAV an die Basisstation, um der Basisstation zu melden, dass der Flugmodus des UAV von dem ersten Modus zu dem zweiten Modus (S102) geändert wird.

2. Verfahren nach Anspruch 1, wobei das Senden der Flugmodusänderungsmeldung des UAV an die Basisstation (S102) umfasst:
Senden der Flugmodusänderungsmeldung des UAV an die Basisstation durch ein Medienzugangssteuerungs-, MAC-, Steuerungselement, CE; oder
Senden der Flugmodusänderungsmeldung des UAV an die Basisstation durch eine Funkressourcensteuerung-, RRC-, Signalisierung.

3. Verfahren nach Anspruch 2, wobei das MAC-CE ein Flugmodusbericht-MAC-CE umfasst.

4. Verfahren nach Anspruch 2, wobei das Senden der Flugmodusänderungsmeldung des UAV an die Basisstation durch die RRC-Signalisierung umfasst:
Senden der Flugmodusänderungsmeldung an die Basisstation durch Einstellen einer ersten Informationseinheit, die den Flugmodus in einer Anwenderausrüstung-, UE-, Assistenzinformationssignalisierung angibt, auf einen ersten vorher eingestellten Wert; oder
Hinzufügen einer zweiten Informationseinheit, die der UE-Assistenzinformationssignalisierung den Flugmodus angibt, und Senden der Flugmodusänderungsmeldung an die Basisstation durch Einstellen der neu hinzugefügten zweiten Informationseinheit auf einen zweiten vorher eingestellten Wert; oder
Senden der Flugmodusänderungsmeldung an die Basisstation durch Einstellen einer dritten Informationseinheit, die den Flugmodus in einer RRC-Verbindungsrekonfigurationvervollständigungssignalisierung angibt, auf einen dritten vorher eingestellten Wert.

5. Verfahren zum Ändern einer Steuerungsstrategie, anwendbar auf eine Basisstation, umfassend:
Empfangen einer Flugmodusänderungsmeldung eines UAV, berichtet durch das UAV (S201);
Bestimmen, dass ein Flugmodus des UAV von einem ersten Modus zu einem zweiten Modus gemäß der Flugmodusänderungsmeldung geändert wird (S202), wobei, wenn der erste Modus ein festgelegter Modus ist, der zweite Modus ein dynamischer Modus ist, oder, wenn der erste Modus ein dynamischer Modus ist, der zweite Modus ein festgelegter Modus ist, wobei in dem festgelegten Modus eine Flugroute des UAV durch eine Steuereinheit geplant wird, und in dem dynamischen Modus das UAV per Fernzugriff durch die Steuereinheit gesteuert wird;
Ändern der Steuerungsstrategie des UAV gemäß der Änderung des Flugmodus des UAV von dem ersten Modus zu dem zweiten Modus (S203).

6. Vorrichtung zum Berichten eines Flugmodus, angewendet auf ein UAV in einem ersten Modus, umfassend:
ein Modusänderungsmodul (41), konfiguriert, um den Flugmodus von dem ersten Modus zu einem zweiten Modus zu ändern, wobei das UAV in einem verbundenen Zustand ist, wobei das UAV in dem verbundenen Zustand in der Lage ist, einer Basisstation einen geänderten Flugmodus zu berichten, wobei, wenn der erste Modus ein festgelegter Modus ist, der zweite Modus ein dynamischer Modus ist, oder, wenn der erste Modus ein dynamischer Modus ist, der zweite Modus ein festgelegter Modus ist, wobei in dem festgelegten Modus eine Flugroute des UAV durch eine Steuereinheit geplant wird, und in dem dynamischen Modus das UAV per Fernzugriff durch die Steuereinheit gesteuert wird;
ein Sendemodul (42), konfiguriert, um eine Flugmodusänderungsmeldung des UAV an die Basisstation zu senden, nachdem das Modusänderungsmodul den Flugmodus von dem ersten Modus zu dem zweiten Modus ändert, um der Basisstation zu melden, dass der Flugmodus des UAV von dem ersten Modus zu dem zweiten Modus geändert wird.

7. Vorrichtung nach Anspruch 6, wobei das Sendemodul (42) umfasst:
ein erstes Sende-Teilmodul (421), konfiguriert, um die Flugmodusänderungsmeldung des UAV durch ein MAC-CE an die Basisstation zu senden; oder
ein zweites Sende-Teilmodul (422), konfiguriert, um die Flugmodusänderungsmeldung des UAV durch eine RRC-Signalisierung an die Basisstation zu senden.

8. Vorrichtung nach Anspruch 7, wobei das MAC-CE ein Flugmodusbericht-MAC-CE umfasst.

9. Vorrichtung nach Anspruch 7, wobei das zweite Sende-Teilmodul (422) umfasst:
eine erste Sendeeinheit (4221), konfiguriert, um die Flugmodusänderungsmeldung durch Einstellen einer ersten Informationseinheit, die den Flugmodus in einer UE-Assistenzinformationssignalisierung angibt, auf einen ersten vorher eingestellten Wert an die Basisstation zu senden; oder
eine zweite Sendeeinheit (4222), konfiguriert, um eine zweite Informationseinheit hinzuzufügen, die der UE-Assistenzinformationssignalisierung den Flugmodus angibt, und die Flugmodusänderungsmeldung durch Einstellen der neu hinzugefügten zweiten Informationseinheit auf einen zweiten vorher eingestellten Wert an die Basisstation zu senden; oder
eine dritte Sendeeinheit (4223), konfiguriert, um die Flugmodusänderungsmeldung durch Einstellen einer dritten Informationseinheit, die den Flugmodus in einer RRC-Verbindungsrekonfigurationvervollständigungssignalisierung angibt, auf einen dritten vorher eingestellten Wert an die Basisstation zu senden.

10. Verfahren zum Ändern einer Steuerungsstrategie, angewendet auf eine Basisstation, umfassend:
ein Empfangsmodul (71), konfiguriert, um eine Flugmodusänderungsmeldung eines UAV, die von dem UAV berichtet wird, zu empfangen;
ein Bestimmungsmodul (72), konfiguriert, um zu bestimmen, dass ein Flugmodus des UAV von einem ersten Modus zu einem zweiten Modus gemäß der von dem Empfangsmodul empfangenen Flugmodusänderungsmeldung geändert wird, wobei, wenn der erste Modus ein festgelegter Modus ist, der zweite Modus ein dynamischer Modus ist, oder, wenn der erste Modus ein dynamischer Modus ist, der zweite Modus ein festgelegter Modus ist, wobei in dem festgelegten Modus eine Flugroute des UAV durch eine Steuereinheit geplant wird, und in dem dynamischen Modus das UAV per Fernzugriff durch die Steuereinheit gesteuert wird;
ein Änderungsmodul (73), konfiguriert, um die Steuerungsstrategie des UAV gemäß der Änderung des Flugmodus des UAV von dem ersten Modus zu dem zweiten Modus, die durch das Bestimmungsmodul bestimmt wird, zu ändern.

## Revendications

1. Procédé de rapport d'un mode de vol, applicable à un véhicule aérien sans pilote, UAV, dans un premier mode, comprenant :
lorsque le UAV est dans un état connecté, le changement du mode de vol du premier mode à un second mode (S101), dans lequel le UAV dans l'état connecté est capable de rapporter un mode de vol modifié à une station de base, dans lequel lorsque le premier mode est un mode fixe, le second mode est un mode dynamique, ou lorsque le premier mode est un mode dynamique, le second mode est un mode fixe, dans lequel dans le mode fixe, un trajet de vol du UAV est planifié via un dispositif de commande, et dans le mode dynamique, le UAV est commandé à distance via le dispositif de commande ;
l'envoi d'une notification de changement de mode de vol du UAV à la station de base pour notifier à la station de base que le mode de vol du UAV est passé du premier mode au second mode (S102).

2. Procédé selon la revendication 1, dans lequel ledit envoi de la notification de changement de mode de vol du UAV à la station de base (S102) comprend :
l'envoi de la notification de changement de mode de vol du UAV à la station de base via un élément de commande, CE, de commande d'accès aux médias, MAC ; ou
l'envoi de la notification de changement de mode de vol du UAV à la station de base via un signal de commande de ressource radio, RRC.

3. Procédé selon la revendication 2, dans lequel le CE MAC comprend un rapport de mode de vol CE MAC.

4. Procédé selon la revendication 2, dans lequel ledit envoi de la notification de changement de mode de vol du UAV à la station de base via le signal RRC comprend :
l'envoi d'une notification de changement de mode de vol à la station de base en définissant une première unité d'informations indiquant le mode de vol dans un signal d'informations d'assistance d'équipement utilisateur, UE, à une première valeur prédéfinie ; ou
l'ajout d'une deuxième unité d'informations indiquant le mode de vol au signal d'informations d'assistance UE, et l'envoi de la notification de changement du mode de vol à la station de base en définissant la deuxième unité d'informations récemment ajoutée à une deuxième valeur prédéfinie ; ou
l'envoi d'une notification de changement de mode de vol à la station de base en définissant une troisième unité d'informations indiquant le mode de vol dans un signal d'achèvement de reconfiguration de connexion RRC à une troisième valeur prédéfinie.

5. Procédé pour changer une stratégie de commande, applicable à une station de base, comprenant :
la réception d'une notification de changement de mode de vol d'un UAV rapportée par le UAV (S201) ;
la détermination qu'un premier mode du UAV est passé d'un premier mode à un second mode selon la notification de changement de mode de vol (S202), dans lequel lorsque le premier mode est un mode fixe, le second mode est un mode dynamique, ou lorsque le premier mode est un mode dynamique, le second mode est un mode fixe, dans lequel dans le mode fixe, un trajet de vol du UAV est planifié via un dispositif de commande, et dans le mode dynamique, le UAV est commandé à distance via le dispositif de commande ;
le changement de la stratégie de commande du UAV selon le changement du mode de vol du UAV du premier mode au second mode (S203).

6. Dispositif de rapport d'un mode de vol, appliqué à un UAV dans un premier mode, comprenant :
un module de changement de mode (41), configuré pour changer le mode de vol du premier mode à un second mode lorsque le UAV est dans un état connecté, dans lequel le UAV dans l'état connecté est capable de rapporter un mode de vol modifié à une station de base, dans lequel lorsque le premier mode est un mode fixe, le second mode est un mode dynamique, ou lorsque le premier mode est un mode dynamique, le second mode est un mode fixe, dans lequel dans le mode fixe, un trajet de vol du UAV est planifié via un dispositif de commande, et dans le mode dynamique, le UAV est commandé à distance via le dispositif de commande ;
un module d'envoi (42), configuré pour envoyer une notification de changement de mode de vol du UAV à la station de base après que le module de changement de mode change le mode de vol du premier mode au second mode pour notifier la station de base que le mode de vol du UAV est passé du premier mode au second mode.

7. Dispositif selon la revendication 6, dans lequel le module d'envoi (42) comprend :
un premier sous-module d'envoi (421), configuré pour envoyer la notification de changement de mode du UAV à la station de base via un CE MAC ; ou
un second sous-module d'envoi (422), configuré pour envoyer la notification de changement de mode de vol du UAV à la station de base via un signal RRC.

8. Dispositif selon la revendication 7, dans lequel le CE MAC comprend un rapport de mode de vol CE MAC.

9. Dispositif selon la revendication 7, dans lequel le second sous-module d'envoi (422) comprend :
la première unité d'envoi (4221), configurée pour envoyer la notification de changement de mode de vol à la station de base en définissant une première unité d'informations indiquant le mode de vol dans un signal d'informations d'assistance UE à une première valeur prédéfinie ; ou
une deuxième unité d'envoi (4222), configurée pour ajouter une deuxième unité d'informations indiquant le mode de vol au signal d'informations d'assistance UE, et l'envoi de la notification de changement du mode de vol à la station de base en définissant la deuxième unité d'informations récemment ajoutée à une deuxième valeur prédéfinie ; ou
une troisième unité d'envoi (4223), configurée pour envoyer la notification de changement de mode de vol à la station de base en définissant une troisième unité d'informations indiquant le mode de vol dans un signal d'achèvement de reconfiguration de connexion RRC à une troisième valeur prédéfinie.

10. Dispositif pour changer une stratégie de commande, appliquée à une station de base, comprenant :
un module de réception (71), configuré pour recevoir une notification de changement de mode de vol d'un UAV rapporté par le UAV ;
un module de détermination (72), configuré pour déterminer qu'un mode de vol du UAV est passé d'un premier mode à un second mode selon la notification de changement de mode de vol reçue par le module de réception, dans lequel lorsque le premier mode est un mode fixe, le second mode est un mode dynamique, ou lorsque le premier mode est un mode dynamique, le second mode est un mode fixe, dans lequel dans le mode fixe, un trajet de vol du UAV est planifié via un dispositif de commande, et dans le mode dynamique, le UAV est commandé à distance via le dispositif de commande ;
un module de changement (73), configuré pour changer la stratégie de commande du UAV selon le changement du mode de vol du UAV du premier mode au second mode déterminé par le module de détermination.
